# EUROPEAN PATENT APPLICATION

(11) **EP 4 814 755 A1**
(43) Date of publication of application: **30.09.2026**
(21) Application number: 25167021.2
(22) Date of filing: 28.03.2025
(51) Int. Cl.: G06F 16/957, G06F 16/958

(54) **FACILITATING SELECTION OF USER PROFILES IN DIGITAL PLATFORMS**

(71) Applicant: Koninklijke KPN N.V., 3072 AP Rotterdam (NL)
(72) Inventor: Casal Gómez, Alejandro Vicente, 2492 VX Den Haag (NL)
(74) Representative: De Vries & Metman

(57) **Abstract**

A method and device are disclosed for selecting a user profile in a digital platform accessed via a device. The digital platform may enable selection of a user profile from multiple user profiles by selecting a visual representation of the user. The method and device may access a database storing meta profiles for a plurality of users, where each meta profile is configured to store, for each of multiple digital platforms, at least one identifier associated with the user's visual representation in the respective digital platform. The method and device may further identify a current user of the device and identify a digital platform that is being accessed. The at least one identifier associated with the visual representation of the current user for the identified digital platform may then be retrieved from the database. Finally, the visual representation of the current user may be selected at the device by matching the retrieved identifier to a visual representation available for selection in the digital platform. Thereby, a better user experience may be provided when accessing multiple digital platforms.

## Description

### TECHNICAL FIELD

The presently disclosed subject matter relates to a computer-implemented method for selecting a user profile in a digital platform, and to a computer-readable medium comprising instructions, which, when executed by a processor system, cause the processor system to perform the method. The presently disclosed subject matter further relates to a device for accessing the digital platform.

### BACKGROUND

Digital platforms are widely used today, offering consumers convenient access to a variety of services. These platforms may be accessed through various devices, such as set-top boxes, smartphones, tablets, and other computing devices, and may allow users to engage with digital content and/or services. Many digital platforms operate online, meaning that key features and functionalities may be accessible via a network. Such online functionality may, for example, enable real-time updates, social interactions, and content streaming. However, some platforms may offer offline capabilities, ensuring usability even without an active network connection.

Consumers may benefit from digital platforms in numerous ways. For example, streaming platforms may provide access to a vast library of multimedia content, allowing users to watch or listen to their preferred entertainment on demand. Gaming platforms may enable immersive experiences, often with interactive and social components that enhance engagement. Social media platforms may facilitate communication, content sharing, and networking, enabling users to stay connected with others. Virtual meeting platforms may support real-time collaboration between users, which may make remote communication more efficient and accessible.

Many digital platforms can be accessed through web-based interfaces, such as those provided by web browsers. Digital platforms may also be accessed through dedicated software applications, commonly known as 'apps,' which offer optimized user interfaces tailored to the digital content and/or services provided by the digital platform.

A digital platform may customize its digital content and/or services to a particular user. For example, streaming services may use recommender systems to personalize streaming content based on a user's streaming history and interactions. Another example is that digital platforms may take into account manually set preferences, as well as user-specific characteristics such as age, location, and other relevant factors. Such customization settings may be stored in user profiles, which may serve as a repository for individualized preferences and usage patterns. Generally, user profiles may be linked to an account on the platform, meaning that when a user logs into a digital platform, for example using a username and an authentication credential such as a password, the associated user profile may be retrieved.

Increasingly, digital platforms support multiple users under a single account. For example, so-called family accounts may allow multiple users to access digital content and services while maintaining separate user profiles for each individual. To distinguish between different users under a single account, digital platforms may offer a selection mechanism. When both the device and platform provide visual output, this selection is typically carried out via a user profile selection screen, allowing a user to choose their profile from among multiple available user profiles by selecting a corresponding visual representation. Such a visual representation may include a user's name, which is often user-selectable and not necessarily their real name, and an avatar, which is also frequently customizable. Selecting a visual representation on-screen, for example using a remote control, touch input, or voice control, may then prompt the platform to load the associated user profile and apply the stored customizations for that user.

Digital content and/or services may be distributed across multiple digital platforms, which can hinder accessibility and ease of use. Accessing specific content or services often requires the user to first locate the relevant platform, for example by searching for and launching an app or by accessing a web-based interface. While some digital platforms allow users to store authentication credentials for quicker access, users may still be required to interact with a user profile selection screen upon logging in. These selection screens may vary significantly across platforms in terms of appearance, user representation, and selection mechanisms, leading to an inconsistent and sometimes confusing experience. Such variations may reduce ease of use and, in some cases, even discourage users from engaging with certain digital platforms.

A more seamless experience may therefore be desirable to access digital content and/or services across a plurality of digital platforms.

### SUMMARY

In accordance with a first aspect of the presently disclosed subject matter, a computer-implemented method is provided for selecting a user profile in a digital platform, wherein the digital platform may be accessible via a device, wherein the digital platform may enable selection of a user profile of a user from multiple user profiles through selection of a visual representation of the user from visual representations of multiple users. The method may comprise:
- accessing a database configured to store a meta profile for each of a plurality of users, each meta profile of a user being configured to store, for each of a plurality of digital platforms, at least one identifier associated with the visual representation of the user in the respective digital platform;
- identifying a current user of the device;
- identifying a digital platform accessed via the device;
- retrieving, from the database, the at least one identifier associated with the visual representation of the current user for the digital platform; and
- at the device, selecting the visual representation of the current user by matching the retrieved at least one identifier to a visual representation available for selection in the digital platform.

In accordance with a further aspect of the presently disclosed subject matter, a computer program is provided comprising instructions which, when executed by a processor system, cause the processor system to perform the method.

In accordance with a further aspect of the presently disclosed subject matter, a device is provided for accessing a digital platform, wherein the digital platform may enable selection of a user profile of a user from multiple user profiles through selection of a visual representation of the user from visual representations of multiple users. The device may comprise:
- a display output interface configured to provide content of the digital platform for display on a display; and
- a processor subsystem which may be configured to:
   - access a database configured to store a meta profile for each of a plurality of users, each meta profile of a user being configured to store, for each of a plurality of digital platforms, at least one identifier associated with the visual representation of the user in the respective digital platform;
   - identify a current user of the device;
   - identify a digital platform accessed via the device;
   - retrieve, from the database, the at least one identifier associated with the visual representation of the current user for the digital platform; and
   - select the visual representation of the current user by matching the retrieved at least one identifier to a visual representation available for selection in the digital platform.

The above measures relate to a digital platform, which may be of a type described in the background section and may offer a selection of multiple user profiles. For example, user profile selection may occur through a user profile selection screen. The user profile selection screen may be presented onscreen after account credentials are entered. The selection of a user profile may be performed using visual representations of the respective users, which may be displayed simultaneously or alternatingly. The selection itself may be made using various input methods, such as a remote control, voice commands, or other interaction mechanisms supported by the digital platform.

A visual representation of a user may take various forms, and may for example include textual and/or graphical elements. A common form may include a textual identifier (e.g., a 'name') and a graphical representation (e.g., an 'avatar'). The visual representation may be at least in part chosen by the user and/or at least in part assigned by the digital platform, for example by automatically generating a random avatar. Accordingly, the visual representation does not necessarily bear a resemblance to the actual user. For example, the textual identifier may be an actual name or a made-up name, either chosen by the user or assigned by the digital platform. The selection of a visual representation may serve as a selection of the user and prompt the digital platform to retrieve and subsequently apply the corresponding user profile. In the following, for clarity and ease of explanation, 'selecting a user' and similar references may be understood to mean selecting a visual representation of the user.

The above measures may involve facilitating the selection of a user profile in a digital platform for a current user of the device through which the digital platform is accessed, for example by at least partial automation. For this purpose, a database is accessed that is configured to store a meta profile for the user, as well as meta profiles for other potential users of the device. For example, the database may be configured to store meta profiles for users within a household, family, group of friends, group of colleagues, or in general any other group of users. A meta profile of a user may be configured to store identifiers associated with the user's visual representations across different digital platforms. For example, a meta profile may include a first identifier or a first set of identifiers corresponding to a first visual representation of the user in a first digital platform and a second identifier or a second set of identifiers corresponding to a second visual representation of the user in a second digital platform, etc. Each identifier or set of identifiers may be associated with the user's visual representation in a particular digital platform, as the identifier(s) may define characteristics that allow the visual representation to be identified, for example among multiple visual representations of different users offered for selection by the digital platform.

The database may be populated with such meta profiles, and the meta profiles themselves may be populated with entries for various digital platforms in different ways, as further described elsewhere in this specification.

To enable facilitating the selection of a user profile in a digital platform for a current user of the device, the current user of the device may be identified. This may for example involve detecting which user is logged into the device or using biometric identification methods. Additionally, the digital platform accessed via the device may be identified. Such identification may for example involve detecting which app has been launched or which web service is being accessed through a web browser. Once the current user and the accessed digital platform have been identified, the identifier(s) associated with the visual representation of the current user for the accessed digital platform may be retrieved from the database. This retrieval may for example comprise looking up the meta profile of the current user in the database and then accessing the entry corresponding to the accessed digital platform within the meta profile.

Having retrieved an identifier or a set of identifiers from the database, the identifier(s) may be used to identify, from a plurality of visual representations provided for selection, the visual representation corresponding to the current user. This identification may involve matching the identifier(s) against the visual representations displayed on-screen, for example by analyzing the displayed visual representations and comparing the identifier(s) against each visual representation. If a sufficient degree of match is determined, the visual representation may be considered to correspond to the user. The identified visual representation may then be selected, thereby prompting the digital platform to select and apply the user profile of the current user.

The above measures may facilitate the selection of a visual representation of the user through automation. This is particularly relevant given the reasons outlined in the background section: with the increasing number of digital platforms, there is also a wide variety of selection screens, and the visual representation of a user may differ significantly across digital platforms. For example, each digital platform may impose different limitations on the available visual representations, resulting in inconsistencies in how users are identified. As a result, selection screens and visual representations can vary greatly between platforms, leading to an inconsistent and sometimes confusing user experience. By automating the selection of the visual representation based on pre-stored identifiers for the visual representation of the current user in the accessed digital platform, a more seamless experience may be provided when accessing digital content and/or services across multiple digital platforms. Advantages include improved user-friendliness, reduced effort required to access digital content and/or services, and an overall more intuitive interaction with digital platforms.

The following embodiments are described with reference to the method but equally apply to a corresponding configuration of the device, wherein the processor subsystem of the device may be configured to execute the method steps.

In an embodiment, the visual representation may comprise a textual identifier of the user, and the method may further comprise matching the textual identifier of the user to a textual identifier available for selection in the digital platform. An example of a textual identifier is a name, which may be an actual name of the user (e.g., "Laura") or a made-up name chosen by or assigned to the user. Textual identifiers may be well-suited for recognition on user profile selection screens and may be reliably matched using text-based comparison techniques. Moreover, textual identifiers are often sufficiently unique to provide a high degree of confidence in the matching process, and textual identifiers require relatively little storage in the database.

In an embodiment, the method may further comprise populating the database by:
- receiving, from at least one digital platform, a plurality of identifiers associated with visual representations of users;
- matching each received identifier to an existing identifier in the database to identify a corresponding user and the meta profile of the user; and
- storing each received identifier in the meta profile for the respective digital platform.

In addition to facilitating the automated selection of a user, the population ('filling') of the database may also be at least partially automated. For this purpose, identifiers associated with visual representations of users may be obtained as identification data from a digital platform. The digital platform may for example make identification data of all users associated with a particular account accessible, such as a group of users registered under the account. In general, the identifiers associated with a visual representation may be linked to the visual representation and/or may be part of the visual representation itself. For example, received identifiers may include textual identifiers and/or graphical elements of the visual representation, or a core set thereof. To enable bulk population of the database, identifiers for all potential users within a group may be retrieved from the digital platform, matched against existing meta profiles in the database, and stored in the corresponding entries of the respective meta profiles. This approach may reduce or eliminate the need for users to manually populate the database, thereby improving convenience and efficiency.

In an embodiment, receiving the plurality of identifiers comprises using an application programming interface, API, wherein the API may be configured to enable the respective digital platform to send the plurality of identifiers to the database or to enable the database to retrieve the plurality of identifiers from the respective digital platform. The use of an API may facilitate direct communication with the digital platform. For example, the API may be provided by the digital platform and used by the presently disclosed method or device. Alternatively, the API may be offered by the device or another entity performing the method and accessed by the digital platform. In some cases, the use of the API may involve authentication, such as providing a username and an authentication credential, e.g., a password, to authorize the digital platform to share the identification data with the method or device.

In an embodiment, the method may further comprise enabling the respective digital platform to, using an application programming interface, API, obtain information identifying a subscriber associated with the device and/or a current user of the device. The digital platform may be configured to query the subscriber and/or the current user of the device. The subscriber information may be used in place of authentication to allow the digital platform to share identifier data as described elsewhere. In some cases, querying the current user may enable the digital platform to bypass the user profile selection screen and automatically select the relevant user profile. This may serve as an alternative to the presently disclosed method and device performing the selection and may be employed for digital platforms that support this functionality. For digital platforms that do not, the presently disclosed method and device may instead perform the selection in the manner previously described.

In an embodiment, the method may further comprise populating the database by:
- capturing a user profile selection screen of the digital platform that displays visual representations available for selection;
- identifying visual representations of users by analyzing the captured selection screen; and
- deriving at least one identifier associated with each visual representation from the user profile selection screen.

The above measures may provide a 'backward-compatible' approach to population the database, as they do not require modifications to the digital platform to accommodate the method and device. Instead, the above measures may generally work with any digital platform. Specifically, the above measures may involve capturing the user profile selection screen, for example by taking one or more screenshots, analyzing the captured user profile selection screen to identify visual representations, and deriving identifier(s) of the visual representations for storage in the database. For example, textual identifiers may be extracted by applying optical character recognition (OCR) to the screenshot, while graphical identifiers, such as avatars, may be processed using feature detection techniques to identify distinctive visual characteristics.

In an embodiment, populating the database may further comprise:
- detecting a manual selection of a visual representation in the user profile selection screen; and
- storing the at least one identifier associated with the selected visual representation for the current user in the database.

The association between a visual representation and the current user may also be established by detecting a manual selection of a visual representation by the current user. Such a manual selection may for example be detected from remote control commands, voice commands, or other user input methods, sometimes in conjunction with the user profile selection screen displaying a currently selected visual representation which is then confirmed by the user, e.g., by an "OK' command. The identifiers of the selected visual representation may then be stored in the database, specifically in the meta profile of the current user within the entry for the accessed digital platform. This approach may allow the database to be populated learning from user selections, and may allow capturing associations between visual representations and users that may otherwise be difficult to establish through automated methods alone.

In an embodiment, the method may further comprise enabling manual editing of entries in the meta profile, for example by enabling adding or modifying identifiers associated with visual representations in digital platforms. The disclosed method and device may provide the user with the option to manually add or update entries in the database, which may be particularly advantageous in cases where automated population was unsuccessful or where corrections are needed.

In an embodiment, selecting the visual representation may comprise detecting a user profile selection screen of the digital platform that displays visual representations available for selection. Visual representations are typically presented on a user profile selection screen for the purpose of user profile selection. Such a user profile selection screen may be detected, for example by the method and device capturing and analyzing one or more screenshots. By detecting the user profile selection screen, the method and device may determine when to begin matching identifiers from the database to the visual representations displayed on-screen.

In an embodiment, detecting the user profile selection screen may comprise using a machine learning model, wherein the machine learning model may be:
- trained using labeled data from a plurality of user profile selection screens; and/or
- trained by the device based on user interactions with selection screens, the user interactions comprising a manual selection of a visual representation.

User profile selection screens may be identified using machine learning. For example, a machine learning model may be pre-trained, e.g., off-device, on a diverse set of labeled selection screens, allowing the trained model to detect selection screens even outside of its training data. Alternatively, or additionally, the model may be trained on-device based on the user's interactions with selection screens, enabling the model to improve detection over time. For example, reinforcement learning techniques may be used to refine the model's ability to detect user profile selection screens based on observed user behavior, such as repeated manual selections of visual representations. Another example is that incremental learning techniques may be used to enable a model to be updated on-device, for example to detect new types of selection screens.

In an embodiment, the method may further comprise using a machine learning model to:
- identify visual representations of users in a captured selection screen; and/or
- derive at least one identifier associated with each visual representation from the captured selection screen.

Machine learning techniques may be used to identify visual representations in a captured selection screen and derive suitable identifiers of the visual representations. For example, a machine learning model may perform functions similar to optical character recognition (OCR) to extract textual identifiers while also analyzing graphical elements to identify the visual representation. The derived identifiers may be used to populate the database. Additionally, or alternatively, the machine learning model may be used to match visual representations displayed on-screen to the corresponding identifiers stored in the database for the accessed digital platform to enable the selection of the visual representation of the current user.

In an embodiment, selecting the visual representation of the current user may comprise emulating navigation and selection commands of a remote control associated with the device. The presently disclosed method and device may interact with the digital platform in the same or a similar manner as a user, for example by generating and sending remote control commands to navigate the user profile selection screen and select the appropriate visual representation. This provides a backward-compatible approach to interacting with the digital platform, as it does not require modifications to the platform itself. Alternatively, selection may be performed using other methods, such as an API provided by the digital platform, which may enable more direct interaction with the digital platform's selection mechanisms.

In an embodiment, the method may further comprise learning the navigation and selection commands to provide by:
- capturing a user profile selection screen of the digital platform that displays visual representations available for selection;
- testing different sequences of navigation and selection commands to determine a path to a target visual representation;
- identifying a successful sequence based on detecting that the digital platform has selected the target visual representation and advanced beyond the user profile selection screen; and
- storing the successful sequence of navigation and selection commands in the database in association with the digital platform.

In cases where the presently disclosed method and device may need to emulate the selection of a user, they may learn how to do so by testing different sequences of navigation and selection commands to determine which sequence successfully leads to selecting a target visual representation. For example, reinforcement learning techniques or heuristic-based exploration may be used to learn the correct sequence of navigation and selection commands. Here, 'navigation commands' may refer to commands that switch between visual representations, while 'selection commands' may refer to commands that confirm a selection. This approach may provide a backward-compatible way of selecting a visual representation, as it does not require modifications to the digital platform or pre-configuration of the method and device for specific platforms. As a result, presently disclosed method and device may be more flexible to adapt to previously unknown or newly introduced digital platforms.

In an embodiment, the method may further comprise learning the navigation and selection commands to provide by:
- capturing user-issued navigation and selection commands while the user manually selects a target visual representation in the user profile selection screen of the digital platform; and
- storing the captured sequence of navigation and selection commands in the database in association with the digital platform.

The presently disclosed method and device may learn from the user which sequence of navigation and selection commands successfully leads to selecting a target visual representation and store this sequence in the database in association with the corresponding digital platform. Once learned, the learned sequence of navigation and selection may be simply retrieved and executed to execute the selection of the visual representation of the current user in the accessed digital platform.

In an embodiment, the method may further comprise, in response to determining that no meta profile exists in the database for the current user, enabling the current user to create a meta profile in the database and to store, in the created meta profile, at least one identifier of a visual representation available for selection in the digital platform. Initially, a meta profile for the current user may not exist. The presently disclosed method or device may prompt the user to create such a meta profile. This may involve storing personal information of the current user as identifiers in the meta profile, which may enable later visual representations to be matched against the stored information. For example, a name may be stored as an identifier, either by requesting the name directly from the user or by obtaining the name from the device, such as from an active user profile that is currently logged in.

In an embodiment, the method may further comprise identifying the current user of the device based on an active user profile that is logged into the device. The current user may be reliably identified by determining which user profile is actively in use on the device.

In an embodiment, the method may further comprise using biometric data to identify the current user of the device, for example by capturing image data using a camera and analyzing the image data to extract biometric features of the user. Other examples of biometric identification that may be used include, but are not limited to, fingerprint recognition, for example using a fingerprint sensor integrated into a remote control of the device, and voice identification, for example using a microphone of the device or remote control.

In an embodiment, the method may further comprise detecting a change in the current user of the device, and in response to the detected change, identifying a new current user of the device.

In an embodiment, the digital platform may be:
- an online platform accessible via a network; and/or
- one of: a streaming platform, a gaming platform, a social media platform, and a virtual meeting platform.

It will be appreciated by those skilled in the art that two or more of the above-mentioned embodiments, implementations, and/or aspects of the invention may be combined in any way deemed useful.

Modifications and variations of any one of the above-mentioned entities (e.g., device, method, computer-readable medium), which correspond to the described modifications and variations of another one of these entities, may be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 shows a user profile selection screen of a digital platform, showing three visual representations of users available for selection, each visual representation including a textual identifier and a graphical representation;
Fig. 2 illustrates a database configured to store meta profiles of users;
Fig. 3 shows a user profile selection screen of another digital platform, displaying visual representations of users available for selection;
Fig. 4 shows the database having been updated by storing identifiers of the other digital platform in the meta profiles of users;
Fig. 5 shows a device for accessing a digital platform;
Fig. 6 shows a method for selection of a user profile; and
Fig. 7 shows a non-transitory computer-readable medium comprising data;

### Reference signs list

The following list of references and abbreviations is provided for facilitating the interpretation of the drawings and shall not be construed as limiting the claims.
- 100, 102: user profile selection screen
- 110-118: visual representation of user
- 120, 122: textual identifier
- 130, 132: avatar
- 140, 142: focus/selection indicator

- 200: database
- 210: meta profile
- 220: textual identifier
- 230: avatar

- 300: device
- 310: network interface
- 320: processor subsystem
- 330: data storage
- 340: display output interface
- 350: control input interface
- 360: network
- 370: display
- 372: display data
- 380: remote control
- 382: control data

- 400: method for selecting user profile
- 410: accessing database comprising meta profiles
- 420: identifying current user
- 430: identifying accessed digital platform
- 440: retrieving identifier(s) from database
- 450: selecting visual representation

- 500: non-transitory computer-readable medium
- 510: stored data

### DESCRIPTION OF EMBODIMENTS

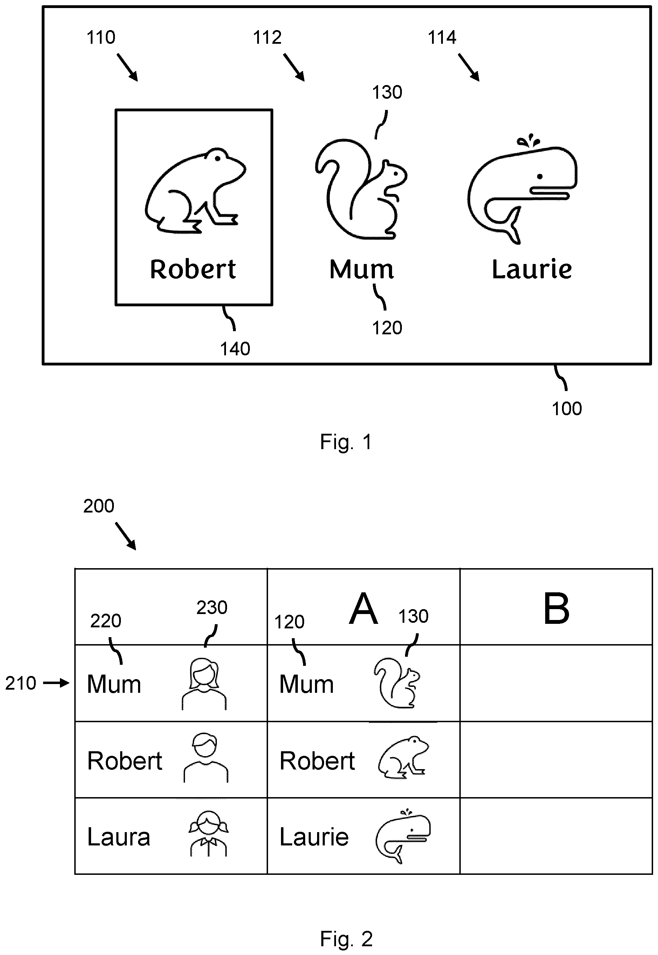

Fig. 1 illustrates a user profile selection screen 100 of a digital platform, for example, a streaming platform. The user profile selection screen 100 may be displayed by a device, for example, on an integrated or external display. Prior to displaying the user profile selection screen, the device may have initiated access to the digital platform, e.g., by a user launching an app, accessing a web service, or automatically by the device.

The user profile selection screen 100 may display visual representations 110-114 of multiple users available for selection. In the example shown in Fig. 1, three visual representations are provided. Visual representation 110 may correspond to the user 'Robert', visual representation 112 may correspond to the user 'Mum', and visual representation 114 may correspond to the user 'Laura'. Each visual representation shown in Fig. 1 includes a textual identifier naming the corresponding user and a graphical representation, allowing users to be distinguished and selected within the digital platform. For example, the textual identifier 120 for the user 'Mum' is the name 'Mum', and the corresponding graphical representation 130 is an avatar in the form of a squirrel. Moreover, the textual identifier for the user 'Laura' is 'Laurie', illustrating that the textual identifier, like the graphical representation, does not necessarily reflect the actual user. Instead, the textual identifier may be a nickname or a made-up name, and the graphical representation may be a user-selected or platform-assigned avatar.

A focus indicator 140 is present on the user profile selection screen 100, indicating a current selection of a user. The focus indicator 140 may highlight one of the visual representations 110-114, showing which user is currently selected. The focus indicator 140 may be movable, allowing a user to navigate between different visual representations using input commands such as remote-control inputs, keyboard navigation, mouse navigation, or other interaction mechanisms supported by the digital platform. Upon confirming the selection, the digital platform may retrieve and apply the user profile associated with the user represented by the selected visual representation.

User profile selection screens may be present across various digital platforms. However, the visual representations of users within the same user group, such as a household, family, group of friends, group of colleagues, or any other group of users, may vary between these digital platforms. For example, a user may have different avatars on different digital platforms, or their textual identifier may differ, as illustrated by the example of 'Laurie' in digital platform A, which may be 'Laura' in digital platform B. Furthermore, visual representations used by the digital platforms may take different forms. Some platforms may omit textual identifiers entirely, while others may use graphical elements that are not avatar-based, leading to a potentially large variability in how one user is visually represented across different digital platforms.

A method may be provided for facilitating the selection of a user profile in a digital platform. For this purpose, a database may be provided that, once populated, stores a meta profile for each of a plurality of users. Each meta profile may be configured to store, for each of a plurality of digital platforms, at least one identifier associated with the visual representation of the user in the respective digital platform.

**Fig. 2** illustrates such a database 200 configured to store meta profiles of users, represented in a simplified table-like format. The figure shows different meta profiles arranged in rows, with corresponding entries for different digital platforms along the columns. In this example, the database 200 includes entries for digital platform A, which corresponds to the digital platform whose user profile selection screen is shown in Fig. 1, and digital platform B, for which no identifiers have been stored yet.

The database 200 is shown to store meta profiles for multiple users, including meta profile 210 for the user 'Mum' as well as meta profiles for users 'Robert' and 'Laura'. Taking the exemplary meta profile 210 for 'Mum,' the meta profile 210 is shown to store platform-independent identifiers of the user 'Mum', such as a textual identifier 220 and an avatar 230 associated with the user. Such identifiers may for example correspond to identifiers of the user 'Mum' on the device through which the digital platforms are accessed. The textual identifier 220 may facilitate linking the meta profile to visual representations of the user in digital platforms. Similarly, the avatar 230 may assist in linking the meta profile to visual representations, or when the meta profile is accessed manually, may help the user recognize the correct profile.

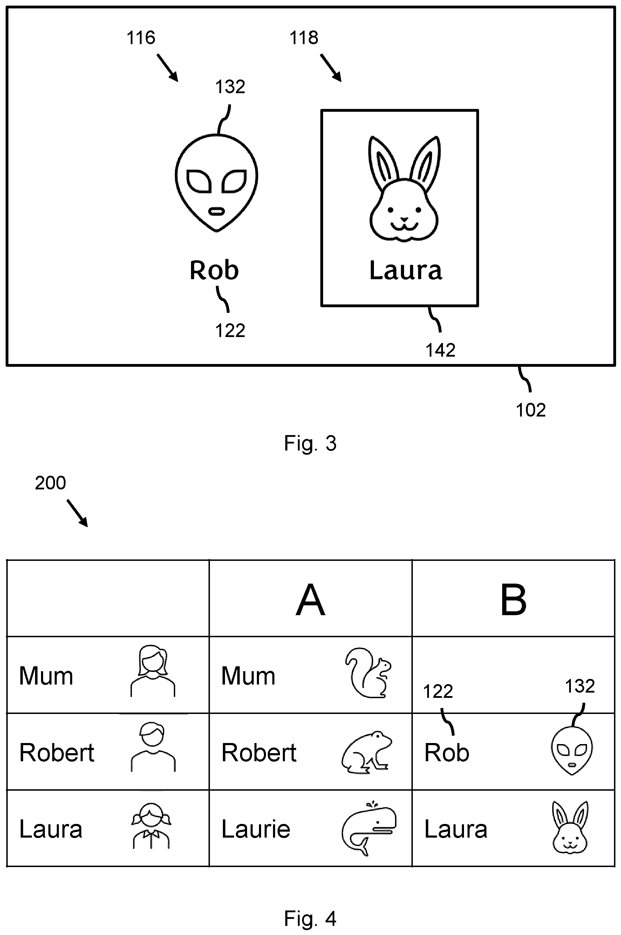

The meta profile 210 includes an entry for digital platform A, showing the avatar 130 and textual identifier 120 ('Mum') used by the user 'Mum' on digital platform A. The avatar 130 and textual identifier 120 are both examples of identifiers associated with the visual representation of the user in digital platform A. These identifiers may correspond to the actual textual identifier and avatar used in the platform. However, this is not a limitation, in that the identifiers stored in the database may be any type of identifier that allows the corresponding visual representation to be identified among multiple representations. For example, identifiers may include distinct visual features detected through feature detection techniques. In such cases, the identifiers may not be easily recognizable by a user but may instead be optimized for machine-based identification. Nevertheless, for ease and clarity in illustrating the database 200, both Fig. 2 and later Fig. 4 depict the identifiers stored in the database as directly corresponding to the visual representation of the user in the respective digital platform.

The method for facilitating the selection of a user profile in a digital platform may further comprise identifying a current user of the device accessing the digital platform. For example, the identification may be based on an active user profile that is logged into the device. Another example is that biometric data may be used to determine the identity of the user. In a specific example, the user may be captured by a camera, the captured image may be subjected to biometric feature extraction, and the extracted biometric features may be compared with stored biometric data to identify the current user. Other biometric identification methods may also be used. For example, fingerprint recognition may be used, where a fingerprint sensor integrated into a remote control or another input device detects the user's fingerprint. Another example is voice identification, where a microphone of the device or remote control captures and analyzes the user's voice pattern. Identification techniques may be used individually or in combination, depending on the capabilities of the device and the digital platform. It is noted that identification of the current user may take place on the device, or alternatively, by an external device that executes at least part of the method. An example of the latter is that biometric user identification may be performed by a smartphone, while the digital platform is accessed on a set-top box connected to a TV.

The method may further comprise identifying a digital platform accessed via the device. The digital platform may for example be identified by detecting a launched app on the device, identifying an accessed web address, or analyzing other access indicators. It is noted that identification of the accessed digital platform may take place on the device, or alternatively, by an external device that executes at least part of the method. An example of the latter is that the accessed digital platform may be detected by a router or gateway which may analyze the network traffic of the device.

Having identified the current user and the accessed digital platform, the method may retrieve, from the aforementioned database, the identifier(s) associated with the visual representation of the current user for the digital platform. The retrieval process may vary depending on the implementation of the database. For example, if the database is stored locally, e.g., in a data storage of the device, the database may be accessed directly via a data storage interface. In another example, if the database is a network-based database, retrieval may be performed via a network interface. Generally, retrieval may comprise looking up the meta profile of the current user, for example by matching identifier(s) of the current user against the non-platform-specific identifier(s) of users, such as textual identifier 220 in Fig. 2. Once the meta profile has been identified, the entry corresponding to the accessed digital platform may be retrieved. In the example of Figs. 1 and 2, this may correspond to platform A.

The method may further comprise matching the retrieved at least one identifier to a visual representation available for selection in the digital platform. For example, a textual identifier of the user from the database may be matched to a textual identifier available for selection in the digital platform. For this purpose, the method may capture a user profile selection screen of the digital platform that displays the visual representations available for selection. The captured selection screen may then be analyzed to identify the visual representation that best corresponds to the retrieved identifiers. To capture the user profile selection screen, the user profile selection screen may first be detected, for example using a machine learning model as described elsewhere in this specification. In some examples, the matching process itself may be performed by a machine learning model, which may analyze the captured selection screen and determine the best correspondence between the retrieved identifiers and the visual representations available for selection. The matching may also be performed using non-machine learning based techniques, for example using heuristics incorporating feature detection techniques. For example, visual representations may be analyzed to detect distinctive features, such as shapes, colors, or patterns, which features may then be used as identifiers and may be compared to feature-based identifiers retrieved from the database for the current user.

Having identified the visual representation of the current user, the method may further comprise selecting the visual representation of the current user to prompt the digital platform to retrieve and apply the user profile of the current user and to proceed past the user profile selection screen. Such selection may involve emulating navigation and selection commands of a remote control associated with the device. The sequence of navigation and selection commands may be determined dynamically, for example using reinforcement learning techniques or heuristic-based exploration, or may be retrieved from the database. In one example, the sequence of commands may initially be determined using reinforcement learning or heuristic-based exploration and then stored in the database for future retrieval. Visual feedback on the effect of the navigation and selection commands may be obtained through the aforementioned screen capture process. For example, the method may detect an onscreen focus indicator, such as the focus indicator 140 in Fig. 1, to determine which visual representation is currently selected. By analyzing the position of the focus indicator, navigation commands may be issued to move the focus indicator to the visual representation of the current user, followed by issuance of a selection command.

Generally, matching and selection may be performed by the device itself, for example by a background service or an application implementing at least part of the method. Another example is that the device may run a screen capture service and a remote-control input service, allowing an external device performing at least part of the method to access the display output of the device and to provide the necessary navigation and selection commands. In yet another example, an external device, such as a smartphone, may perform the matching and effect the selection by capturing the display output using its camera and then emulating or registering as a remote control to transmit the navigation and selection commands to the device. It is noted that the final selection of the visual representation may be performed by the device itself.

Figs. 3 and 4 illustrate the population of the database. **Fig.** 3 shows a user profile selection screen 102 of another digital platform, here named platform B, which may display visual representations of users available for selection. In Fig. 3, visual representation 116 may correspond to the user 'Robert,' which may include a textual identifier 122 ('Rob') and a graphical representation 132 as an avatar. Moreover, visual representation 118 may correspond to the user 'Laura.' The user 'Mum' may not be available on the user profile selection screen 102, for example since this user may not have created an individual user profile on platform B. A focus indicator 142 may be present on the user profile selection screen 102, indicating the current selection.

**Fig. 4** shows the database 200 having been updated by newly storing identifiers of digital platform B in the meta profiles of users. Specifically, the meta profiles of users 'Robert' and 'Laura' may have been extended with the identifiers associated with the visual representations of the respective users in digital platform B.

Populating the database may take place in various ways, for example on-device or by an external device capturing display output of the device. A specific example may involve capturing a user profile selection screen of the digital platform that displays the visual representations available for selection, identifying visual representations of users by analyzing the captured selection screen, and deriving at least one identifier associated with each visual representation from the user profile selection screen. The derived identifiers may then be matched against identifiers in the meta profiles of users stored in the database to determine which visual representation corresponds to which user in the database, and thus to which meta profile. For example, the derived identifiers may be compared to non-platform-specific identifiers of users and/or to the identifiers associated with the users in other digital platforms.

In case there is uncertainty about which visual representation in a new digital platform corresponds to which user in the database, e.g., to which meta profile, the method may detect a manual selection of a visual representation in the user profile selection screen. As the current user may be previously identified by the method, the method may thereby determine the visual representation of the current user and subsequently store the identifier(s) associated with the selected visual representation for the current user in an entry for the new digital platform in the database.

In other examples, populating the database may involve direct communication with the digital platform, which in some cases may be performed by a separate device rather than the device used to access the platform. For example, the method may comprise receiving, from at least one digital platform, a plurality of identifiers associated with visual representations of users, matching each received identifier to an existing identifier in the database to identify a corresponding user and the meta profile of the user, and storing each received identifier in the meta profile for the respective digital platform. For this purpose, an application programming interface, API, may be used. Specifically, receiving the plurality of identifiers may comprise using an API configured to enable the respective digital platform to send the plurality of identifiers to the database. Another example is an API configured to enable the database to retrieve the plurality of identifiers from the respective digital platform.

In general, digital platforms such as streaming services typically offer users the ability to create distinct user profiles to personalize the platform's experience for different individuals within the same subscriber account. Telecom operators and other providers may aggregate and present content from multiple such digital platforms within a unified user interface, and thereby act as content super-aggregators. These super-aggregators may implement their own user profiles to personalize content aggregation and presentation per individual user. A technical challenge may arise when attempting to match user profiles created in the super-aggregator application ('super-aggregator profiles') with corresponding user profiles created by the same user in individual digital platforms ('digital platform profiles'). Ideally, users would select their profile only once in the super-aggregator application, with this selection automatically resulting in selection of the corresponding digital platform profiles in each accessed digital platform.

To facilitate profile selection across different digital platform accessed from the device, a mapping may be maintained between the super-aggregator profiles and the digital platform profiles. This mapping may be stored in a database of meta profiles, as described elsewhere in this specification. The database storing meta profiles of users may in some cases initially contain only identifiers associated with super-aggregator profiles, without entries corresponding to external digital platforms. For example, identifiers of super-aggregator profiles may be stored in the database as non-platform-specific identifiers, such as identifiers 220 and 230 previously shown in Fig. 2. Optionally, the database may initially also include entries for digital platforms known to support user profiles but without yet containing specific digital platform profile identifiers. The database may subsequently be populated by several methods, including manual input, programmatic retrieval via an Application Programming Interface (API), or automatic recognition through machine learning.

In a first exemplary method to populate the database, a user may manually populate the database by accessing a mapping interface provided by the super-aggregator application. Through this interface, the user may add or edit mappings between existing super-aggregator profiles and corresponding digital platform profiles. For example, the user may manually add or edit textual identifiers (e.g., user profile names), while visual identifiers (e.g., avatars) may in some cases not be editable, for example if populated by the digital platform. For example, a super-aggregator profile with the textual identifier 'Laura' may be manually mapped to a corresponding digital platform profile named 'Laura' in a streaming application identified in the database.

In a second exemplary method, the database may be populated programmatically by retrieving the identifiers of visual representations of users in a digital platform ('digital platform profile identifiers') using an API. The super-aggregator application may request, via the API, that digital platforms provide identifiers of their respective user profiles. Alternatively, digital platforms may proactively send their user profile identifiers to the super-aggregator application using the API. Received identifiers may then be stored in the corresponding meta profile of the user. When received identifiers correspond textually (e.g., identical or similar profile names) with identifiers of existing super-aggregator profiles, they may be automatically matched. In cases where identifiers cannot be matched, optionally, new super-aggregator profiles may be created. For example, if a digital platform profile identified by the name 'Anna' has no existing match, a new super-aggregator profile named 'Anna' may be generated.

A third exemplary method for populating the database may employ an artificial intelligence-based User Profile Identification (UPI) module. This UPI module may be implemented using a trained machine-learning model capable of recognizing user profile selection screens when they appear on a user's device (e.g., a set-top box, personal computer, or smart TV). The module may analyze graphical output from the device, for example continuously or selectively upon launch of a digital platform, and may identify visual representations of user profiles (e.g., profile names, avatars) displayed on these screens. The recognized identifiers may then be communicated to the super-aggregator application, matched with existing super-aggregator profiles, and added to the database accordingly. For example, upon launching a streaming application ('Red app') displaying profiles 'Peter,' 'Mum,' and 'Robert,' the UPI module may communicate these identifiers to the super-aggregator application, which may update the meta profiles with these newly identified digital platform profiles.

Upon populating the database with matched identifiers, the super-aggregator application may automatically select the correct digital platform profile in a digital platform by selecting the visual representation of a user corresponding to the currently active super-aggregator profile. When a digital platform is accessed and the UPI module detects the user profile selection screen, the super-aggregator application may retrieve the stored identifier(s) matching the currently active super-aggregator profile. Subsequently, the UPI module may emulate user input commands (e.g., remote control key presses) necessary to navigate and select the correct profile on the user profile selection screen. For example, if the active super-aggregator profile belongs to a user 'Robert' and the user profile selection screen initially highlights 'Peter,' the UPI module may determine that the selection requires two navigation commands (e.g., two presses of a right-arrow key) followed by an 'OK' command to select 'Robert's profile.

If no matching digital platform profile exists for the currently active super-aggregator profile, several options may be implemented. For example, the super-aggregator application may allow manual selection by the user without further intervention, may prompt the user to create or select a profile, or may automatically record the user's manually selected digital platform profile and associate identifiers thereof with the super-aggregator profile in the metaprofile of the user in the database, optionally subject to user confirmation. For example, if the super-aggregator profile 'Laura' has no corresponding profile in the 'Red app,' and the user manually selects the 'Mum' profile, this selection may be stored in the meta profile as an identifier for the 'Red app' in association with Laura's super-aggregator profile for future selection.

With continued reference to the detection of the user profile selection screen, it is noted that such detection may comprise capturing and analyzing one or more screenshots of the digital platform's interface. Detection may be performed using predefined heuristics, such as recognizing known layout structures of selection screens. Alternatively, or additionally, detection may be performed using a machine learning model trained to identify profile selection screens based on characteristic visual patterns. For example, a machine learning model may be trained on a plurality of user profile selection screens. The model may be trained off-device using labeled training data containing selection screen layouts from multiple digital platforms, including variations in UI elements, fonts, colors, etc. In a specific example, a Convolutional Neural Network (CNN) may be used to process images of selection screens, allowing the machine learning model to identify key graphical components such as profile avatars, circular or square profile picture placeholders, or UI elements indicating profile selection (e.g., highlighted selections, arrows, or selection borders). The model may be trained on-device based on user interactions, for example as an alternative to the off-device training or in combination with an initial off-device training, which may allow the model to improve detection accuracy over time. For example, reinforcement learning techniques may be applied to refine the model's ability to detect profile selection screens by analyzing patterns in user behavior, such as repeated manual selections of user profiles following specific screen transitions.

Once the user profile selection screen is detected, the method may further comprise using a machine learning model to identify visual representations of users and derive at least one identifier associated with each representation. A model based on an Optical Character Recognition (OCR) pipeline, such as a Tesseract-based engine or a deep learning-based text detection network like EAST (Efficient and Accurate Scene Text Detector), may be used to extract textual identifiers from the selection screen. These identifiers may include explicit profile names (e.g., 'Laura,' 'Robert') displayed beneath avatars or within UI elements. Additionally, image classification models may be used to recognize graphical identifiers such as avatars, distinguishing between predefined platform-provided avatars, custom user-uploaded images, or icons representing different user types (e.g., child profiles or guest accounts). The derived identifiers may then be used to populate the database or matched against stored identifiers in the database to facilitate profile selection.

It is noted that separate machine learning models may be used for different tasks, such as detecting the user profile selection screen and deriving identifiers from visual representations of users. For example, a first model may detect selection screens based on layout features, while a second model may extract identifiers using OCR for text and classification techniques for graphical elements such as avatars. Alternatively, a single multi-task model may be trained to perform both tasks.

With continued reference to the selection of the visual representation of the current user, it is noted that such selection may comprise emulating navigation and selection commands of a remote control associated with the device. Accordingly, the presently disclosed method or device may interact with the digital platform as a user would, generating and sending remote control commands to navigate the user profile selection screen and select the appropriate visual representation. For example, once a user profile selection screen is detected and the matching profile identifier is retrieved from the database, the method or device may analyze the screen layout to determine the shortest navigation path to the target profile. Reinforcement learning techniques or heuristic-based search algorithms, such as A* pathfinding, may be used to determine the optimal sequence of directional inputs (e.g., left, right, up, down) followed by a selection input (e.g., 'OK' or 'Enter'). This may provide a backward-compatible approach that may not require modifications to the digital platform's software or UI.

Alternatively, the selection of the visual representation of the current user may be performed through an API provided by the digital platform, where available, which may enable direct interaction with the platform's selection mechanisms.

With continued reference to the selection of the visual representation of the current user, it is noted that the correct navigation and selection commands may be learned by the method or device, for example by capturing a profile selection screen, testing different command sequences, and determining which successfully selects a target visual representation. During this learning process, the method or device may iteratively issue navigation commands while monitoring the on-screen response, detecting when the selected profile changes or when the user profile selection screen transitions to the next interface (e.g., the home screen of the digital platform). If a successful sequence of commands is identified, it may be stored in the database for future use. Additionally, navigation and selection commands may be learned from the user's manual interactions, where the device records user-issued navigation inputs and stores the sequence for automated execution in future profile selection instances.

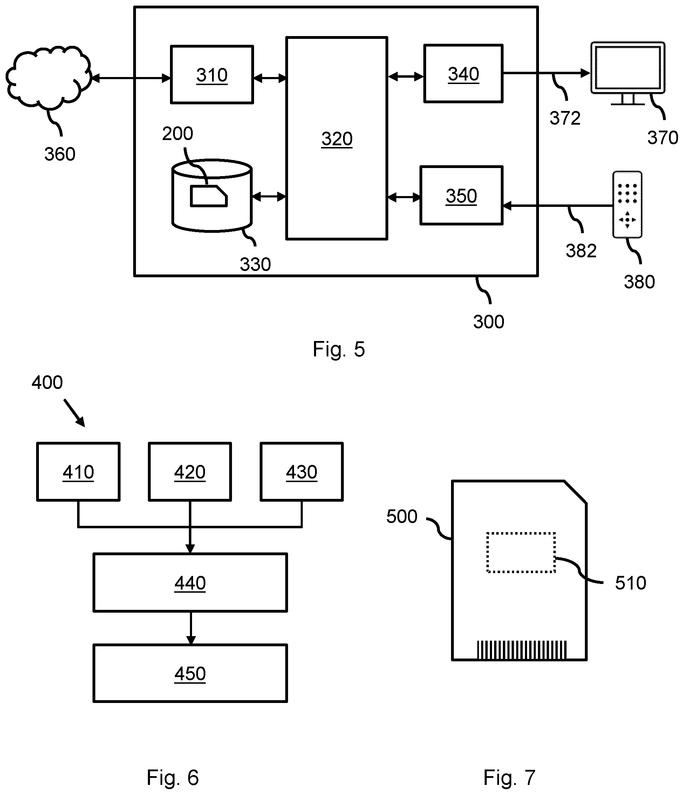

**Fig.** 5 shows a device 300 that may be used for accessing a digital platform. The device 300 may comprise a network interface 310, a processor subsystem 320, a data storage 330, a display output interface 340, and a control input interface 350. The network interface 310 may enable communication with a network 360, allowing the device 300 to access digital platforms and retrieve relevant data. The processor subsystem 320 may be configured to perform steps of the method as presently disclosed, for example by implementing a super-aggregator application configured to facilitate user profile selection across multiple digital platforms. The data storage 330 may store information required for the operation of the device, including a database 200 of meta profiles associating user identifiers across different digital platforms.

The display output interface 340 may be configured to output display data 372 to show content of the digital platform on a display 370. The control input interface 350 may enable user interaction with the device 300, for example by receiving control data 372 from a remote control 380. The remote control 380 may be used to navigate user interfaces displayed on the display 370, including user profile selection screens of digital platforms. Although not shown in Fig. 5, the device 300 may include further output interfaces and/or further input interfaces. For example, the device 300 may comprise an audio output interface configured to output auditory content via a speaker. Additionally, or alternatively, the device 300 may include a video input interface, such as an interface to a camera, which may be used for capturing video data for various purposes, including user identification or interaction tracking. The device 300 may further comprise a biometric interface, such as an interface to a fingerprint scanner, an iris scanner, or a facial recognition module, which may be used for user identification or authentication, and/or for personalization of content based on the identified user.

The network interface 310 may be configured for network data communication, for example to receive and send data via the network 360. The network interface 310 may for example be a wired communication interface, such as a fiberoptic interface or an Ethernet interface, or a wireless communication interface, such as a Wi-Fi or cellular radio interface. The processor subsystem 320 may be implemented using one or more processors, which may be configured by hardware design or software to perform the operations described in this specification for the device 300, including the steps of the presently disclosed method. In some embodiments, the processor subsystem 320 may be embodied by a single Central Processing Unit (CPU), such as an x86 or ARM-based CPU, or by a combination of multiple CPUs. Alternatively, the processor subsystem 320 may be implemented using programmable logic, such as a Field-Programmable Gate Array (FPGA), to execute the described operations/steps. The device 300 may also include other types of processing units, including hardware accelerators such as Graphics Processing Units (GPU).

The data storage 330 may comprise non-volatile memory, such as flash memory, a solid-state drive, or other persistent storage, and may be used for long-term storage of data. Additionally, although not shown in Fig. 5, the device 300 may comprise volatile memory, such as RAM, for temporary storage of data. In some implementations, the processor subsystem 320 may execute software that has been downloaded, for example from the Internet, and/or stored in the data storage 330. The execution of the software may use both volatile memory and non-volatile memory.

The device 300 may correspond to a variety of computing devices capable of accessing digital platforms. For example, the device 300 may be a set-top box, a smart TV, a streaming media player, a personal computer, a laptop, a tablet, a smartphone, a gaming console, a home automation hub, a virtual reality (VR) headset, an augmented reality (AR) headset, a vehicle infotainment system, or in general any device, network-connected or not, which is capable of accessing digital platforms.

The steps of the presently disclosed method may be implemented in a distributed manner. For example, certain processing tasks related to user profile selection may be executed locally within the processor subsystem 320, while others may be performed in a cloud-based service or an external computing system connected to the device 300 via the network 360. Moreover, data storage 330 may be implemented on the device, in a network-based storage solution, or as a combination of local storage and network-based storage. Accordingly, the database 200 may, in some examples, be stored locally on the device 300, while in other examples, the database may be accessed from a network-based storage, e.g., a cloud server.

**Fig. 6** illustrates a method 400 for selecting a user profile in a digital platform. The method 400 may comprise steps 410-450, of which at least steps 410, 420, and 430 may be performed concurrently or in any order. Specifically, the method 400 may comprise, in a step titled "ACCESSING DATABASE COMPRISING META PROFILES", accessing 410 a database configured to store a meta profile for each of a plurality of users, each meta profile of a user being configured to store, for each of a plurality of digital platforms, at least one identifier associated with the visual representation of the user in the respective digital platform. The method 400 may further comprise in a step titled "IDENTIFYING CURRENT USER", identifying 420 a current user of the device. The method 400 may further comprise, in a step titled "IDENTIFYING ACCESSED DIGITAL PLATFORM", identifying 430 a digital platform accessed via the device. The method 400 may further comprise, in a step titled "RETRIEVING IDENTIFIER(S) FROM DATABASE", retrieving 440, from the database, the at least one identifier associated with the visual representation of the current user for the digital platform. The method 400 may further comprise, in a step titled "SELECTING VISUAL REPRESENTATION", at the device, selecting 450 the visual representation of the current user by matching the retrieved at least one identifier to a visual representation available for selection in the digital platform.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 500 as for example shown in Fig. 7, e.g., in the form of a series 510 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 7 shows by way of example a memory card 500.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of selecting a user profile in a digital platform, wherein the digital platform is accessible via a device, wherein the digital platform enables selection of a user profile of a user from multiple user profiles through selection of a visual representation of the user from visual representations of multiple users, the method comprising:
- accessing a database configured to store a meta profile for each of a plurality of users, each meta profile of a user being configured to store, for each of a plurality of digital platforms, at least one identifier associated with the visual representation of the user in the respective digital platform;
- identifying a current user of the device;
- identifying a digital platform accessed via the device;
- retrieving, from the database, the at least one identifier associated with the visual representation of the current user for the digital platform; and
- at the device, selecting the visual representation of the current user by matching the retrieved at least one identifier to a visual representation available for selection in the digital platform.

2. The method according to claim 1, wherein the visual representation comprises a textual identifier of the user, wherein the method further comprises matching the textual identifier of the user to a textual identifier available for selection in the digital platform.

3. The method according to claim 1 or 2, further comprising populating the database by:
- receiving, from at least one digital platform, a plurality of identifiers associated with visual representations of users;
- matching each received identifier to an existing identifier in the database to identify a corresponding user and the meta profile of the user; and
- storing each received identifier in the meta profile for the respective digital platform.

4. The method according to claim 3, wherein receiving the plurality of identifiers comprises using an application programming interface, API, wherein the API is configured to enable the respective digital platform to send the plurality of identifiers to the database or to enable the database to retrieve the plurality of identifiers from the respective digital platform.

5. The method according to any one of claims 1 to 4, further comprising populating the database by:
- capturing a user profile selection screen of the digital platform that displays visual representations available for selection;
- identifying visual representations of users by analyzing the captured selection screen; and
- deriving at least one identifier associated with each visual representation from the user profile selection screen.

6. The method according to claim 5, wherein populating the database further comprises:
- detecting a manual selection of a visual representation in the user profile selection screen; and
- storing the at least one identifier associated with the selected visual representation for the current user in the database.

7. The method according to any one of claims 1 to 6, further comprising enabling manual editing of entries in the meta profile, for example by enabling adding or modifying identifiers associated with visual representations in digital platforms.

8. The method according to any one of claims 1 to 7, wherein selecting the visual representation comprises detecting a user profile selection screen of the digital platform that displays visual representations available for selection.

9. The method according to claim 8, wherein detecting the user profile selection screen comprises using a machine learning model, wherein the machine learning model is:
- trained using labeled data from a plurality of user profile selection screens; and/or
- trained by the device based on user interactions with selection screens, the user interactions comprising a manual selection of a visual representation.

10. **The** method according to claim 8 or 9, further comprising using a machine learning model to:
- identify visual representations of users in a captured selection screen; and/or
- derive at least one identifier associated with each visual representation from the captured selection screen.

11. **The** method according to any one of claims 1 to 10, wherein selecting the visual representation of the current user comprises emulating navigation and selection commands of a remote control associated with the device.

12. The method according to any one of claims 1 to 11, further comprising, in response to determining that no meta profile exists in the database for the current user, enabling the current user to create a meta profile in the database and to store, in the created meta profile, at least one identifier of a visual representation available for selection in the digital platform.

13. The method according to any one of claims 1 to 12, further comprising identifying the current user of the device:
- based on an active user profile that is logged into the device; and/or
- using biometric data to identify the current user of the device, for example by capturing image data using a camera and analyzing the image data to extract biometric features of the user.

14. A computer program comprising instructions which, when executed by a processor system, cause the processor system to perform the method according to any one of claims 1 to 13.

15. A device for accessing a digital platform, wherein the digital platform enables selection of a user profile of a user from multiple user profiles through selection of a visual representation of the user from visual representations of multiple users, the device comprising:
- a display output interface configured to provide content of the digital platform for display on a display; and
- a processor subsystem configured to:
- access a database configured to store a meta profile for each of a plurality of users, each meta profile of a user being configured to store, for each of a plurality of digital platforms, at least one identifier associated with the visual representation of the user in the respective digital platform;
- identify a current user of the device;
- identify a digital platform accessed via the device;
- retrieve, from the database, the at least one identifier associated with the visual representation of the current user for the digital platform; and
- select the visual representation of the current user by matching the retrieved at least one identifier to a visual representation available for selection in the digital platform.
